# EUROPEAN PATENT SPECIFICATION

(11) **EP 1 041 771 B1**
(45) Date of publication and mention of the grant of the patent: **17.06.2009**
(21) Application number: 99302624.4
(22) Date of filing: 01.04.1999
(51) Int. Cl.: H04L 12/28, H04L 1/12

(54) **Enhanced data rate control for wireless communication**
Verbesserte Datenratensteuerung zur drahtlosen Kommunikation
Contrôle amélioré du débit de données pour communication sans fil

(43) Date of publication of application: 04.10.2000
(73) Proprietor: LUCENT TECHNOLOGIES INC., Murray Hill NJ 07974-0636 (US)
(72) Inventor: Moelard, Hendrik, 3607 GT Maarssen (NL); Monteban, Leo, 3437 VB Nieuwegein (NL); Raghawa Prasad, Anand, 2624 ZD Delft (NL)
(74) Representative: Williams, David John

(56) References cited:
- EP-A- 0 637 150
- EP-A- 0 841 771
- WO-A-94/15413
- US-A- 5 526 399

## Description

### Filed of the Invention

The present invention relates to communication between devices where it is possible for the communication to be supported by at least two common data rates, and is particularly but not exclusively related to communication between wireless terminals.

### Background to the Invention

Devices that support several possible data rates are widely available. When such a device is connected for communication with another device, it may be possible that the other device also supports communication at a plurality of data rates. Thus there may exist a set of common data rates between the two devices at which communication between the two devices may take place.

Data rates usable by a device may depend, for example, on: actual possible data rates (determined by modem capabilities); available data rates (determined by customer specification); and desired data rates (determined by the user).

Whilst it may appear that it would be beneficial to always transmit at the highest common data rate, there may be applications where the highest common data rate is not the most advantageous data rate to transmit at.

For example, in wireless communications different data rates each have their own benefits. A wireless system communicating at 1Mbit/s is not necessarily inferior to one that communicates at 8Mbit/s, or vice versa. This is because lower data rates may allow communication in worse-case channel conditions which could not support communication at high data rates. In mobile communications low data rates may also allow bigger cell sizes to be utilised than would high data rates.

Lucent Technologies has developed, and is further developing, circuits suitable for use in wireless local area network (LAN) systems which have different data rate capabilities. The circuits are carried on cards which are provided in system equipment. Four different types of system card supporting four different sets of data rates are available for one Lucent Technologies wireless LAN system, known as WaveLAN. These cards are (1) the WaveLAN-II card with 1 and 2Mbit/s data rates supported; (2) the Turbo card with 1, 2, 5 and 8Mbit/s data rates supported; (3) the High Speed card with 1, 2, 5.5 and 11Mbit/s data rates supported; and (4) the Turbo plus High Speed card with 1, 2, 5, 5.5, 8 and 11Mbit/s data rate capabilities supported. The data rates supported by these four cards are summarised in Table I below.

**Table I**

| **Cards** | **Data Rates (Mbit/s)** |
|---|---|
| Standard | 1 and 2 |
| Turbo | 8, 5, 2 and 1 |
| High Speed | 11, 5.5, 2 and1 |
| Turbo + High Speed | 11, 8, 5.5, 5, 2 and 1 |

Thus it can be seen that for the WaveLAN system, the data rates which can be supported depends upon the system card provided at each end of the communication link. For a particular combination of cards, a large number of common data rates may be available.

Thus there are numerous applications where it would be desirable to select between an available set of common data rates between devices based on a criteria other than purely the fastest of the possible data rates.

There is even more need of such a mechanism as development is made toward a "metropolitan" environment; an environment where systems communicating in varying data rates can co-exist.

It is an object of the present invention to provide an improved technique for selecting one of a set of variable data rates available for use in a communication link between two devices.

US 5,526,399 discloses a data transmission system in which the transmission rate can change in response to channel conditions. However, the common data rates available to the stations are predetermined and stored in advance.

EP 0 637 150 discloses a mobile data communications system in which transmission is initiated at the highest permissible rate, and is reduced if the communication channel subsequently degrades. However, the data rates available to the stations are predetermined and stored in advance.

### Summary of the Invention

According to the present invention there is provided a method according to claim 1.

Preferably, said step of determining comprises storing the set of data rates common to both the first and second data rate sets.

The present invention thus provides a technique for determining a common data rate generally, and which finds particular advantages in its application for all existing and future wireless local area network systems. The technique allows communication between different wireless local area network cards, which is sometimes known as backward/forward compatibility, or interoperability. An auto rate control mechanism which can determine the best usable data rate for a given channel condition improves performance.

The data rate may be increased or decreased responsive to an indication of the success of a transmission. If the transmission is successful the data rate is preferably increased. The data rate is preferably increased to the next successive higher value in the set. If the transmission is unsuccessful the data rate is preferably decreased. The data rate is preferably decreased to the next successive lower value in the set.

Where applicable, the technique thus allows stepwise data rate fallback, and depending upon the application also allows stepwise increase in data rate.

The invention will now be described by way of example with reference to the accompanying drawings in which:

### Brief Description of the Drawings

Figure 1 illustrates the input/output circuitry block elements for determining a common data rate between devices in accordance with the present invention;
Figure 2 illustrates a first technique for dynamically determining the common data rate in accordance with a embodiment of the invention;
Figure 3 illustrates the format of a common data rate table according tot he embodiment of Figure 2; and
Figure 4 illustrates a technique for dynamically determining the common data rate in accordance with a further embodiment of the present invention.

### Description of Preferred Embodiment

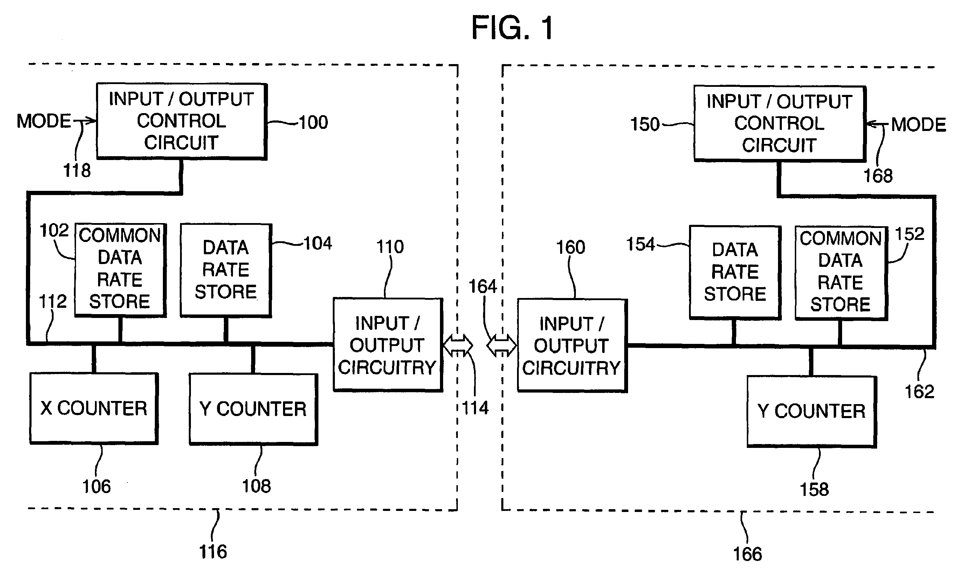

Figure 1 illustrates a first and a second terminal, generally indicated by numerals 116 and 166 respectively. The present invention may apply to any two terminals or devices in communications with each other that have a set of common data rates, whether the devices are wireless or otherwise. However for the purposes of the present description it is assumed that the devices 116 and 166 are wireless terminals, and more specifically that they are a station and an access point of a WaveLAN wireless local area network (LAN) system.

It should be noted that in Figure 1 only those elements are shown in each of the first and second terminals that are necessary for an understanding of the present invention.

The first terminal 116 (which in this example is considered to be a station of a wireless LAN system) comprises an input/output control circuit 100, a common data rate store 102, a data rate store 104, an X counter 106, an N counter 108, and input/output circuitry 110. All the elements of the first terminal 116 shown in Figure 1 are interconnected by a common bus 112. The input/output circuitry 110 transmits and receives signals on the air interface, as represented by the bi-directional arrow 114. Similarly, the second terminal 166 (which in this example is considered to be an access point of a wireless LAN system) comprises an input/output control circuit 150, a common data rate store 152, a Y counter 156, an N counter 158, and input/output circuitry 160. All the elements of the first terminal 166 shown in Figure 1 are interconnected by a common bus 162. The input/output circuitry 110 transmits and receives signals on the air interface, as represented by the bi-directional arrow 164.

Each of the first and second terminals 116 and 166 is capable of operating in two modes of operation. A first mode is called a fixed rate mode. In this mode the operation is set at one fixed data rate. A second mode, in accordance with the present invention, is called enhanced rate fallback operation. In this mode operation is dynamically set at a particular one of a plurality of available data rates, as described in further detail hereinbelow.

The mode of operation for each of the first and second terminals is determined by the value of a signal MODE on a line 118 to the input/output control circuit 100, and an equivalent signal MODE on a line 168 to the input/output control circuit 150.

In the preferred example of the present invention the operation of the first and second terminals is slightly different. This is based on the example of the first terminal being a base, and the second terminal being an access point. In general the first terminal may be considered to be a base station and the second terminal may be considered to be a mobile station. In such an arrangement the second terminal has some dependency upon the first terminal for its operation.

The invention will now be described further with reference to the additional accompanying drawings.

In the present invention the two terminals communicate with each other in the enhanced rate fallback operation mode to determine a set of common data rates, i.e. data rates that can be supported by both terminals. Thereafter, the data rate to be used is determined dynamically based on channel conditions.

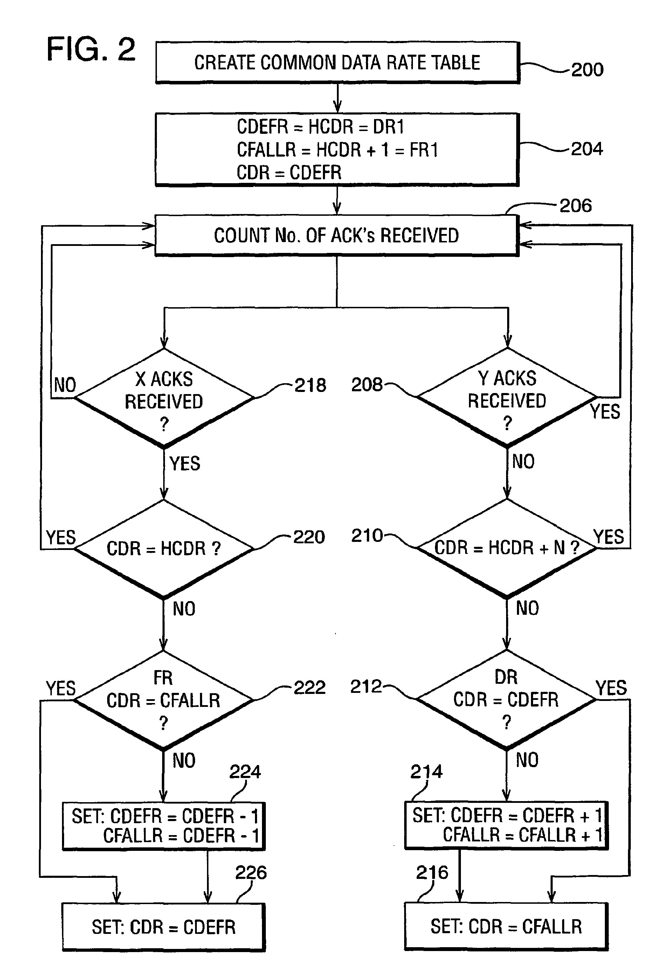

The flow chart of Figure 2 illustrates a preferred sequence of steps for the first terminal 116 of the present example. In a step 200 of the flow chart of Figure 2, it is assumed that the enhanced rate fallback mode of operation has already been selected, and a common data rate table is created. The common data rate table, which is a table listing those data rates common to both the first and second terminals, is determined during the establishment of the communication link between the first and second terminals. This is obviously dependent upon the application, and it will be within the scope of one skilled in the art as to how the control information exchanged during the establishment of the link may be adapted to include an exchange of the data rates supported by each device. In one particular example, where the first and second terminals are a station and access point respectively of a WaveLAN system, the exchange and comparison of data rate information takes place during Association/ Re-Association.

In the present example it is assumed that the first terminal is provided with a turbo and high speed card, and that the second terminal is provided with a high speed card. Referring back to Table I, the first terminal therefore supports a data rate set {11, 8, 5.5, 5, 2, 1} and these values are stored in the data rate store 104 of the first terminal. The second terminal supports a data rate set {11, 5.5, 2, 1} and these values are stored in the data rate store 154 of the second terminal

Under the control of the input/output control circuits 100 and 150 of the first and second terminals, the contents of the respective data rate stores are exchanged between the terminals, and the data rates which are common to the terminals stored in the respective common data rate stores 102 and 152 of the two terminals. Thus the set of data rates common to both the first and second terminals {11, 5.5, 2, 1} is stored in the common data rate stores 102 and 152.

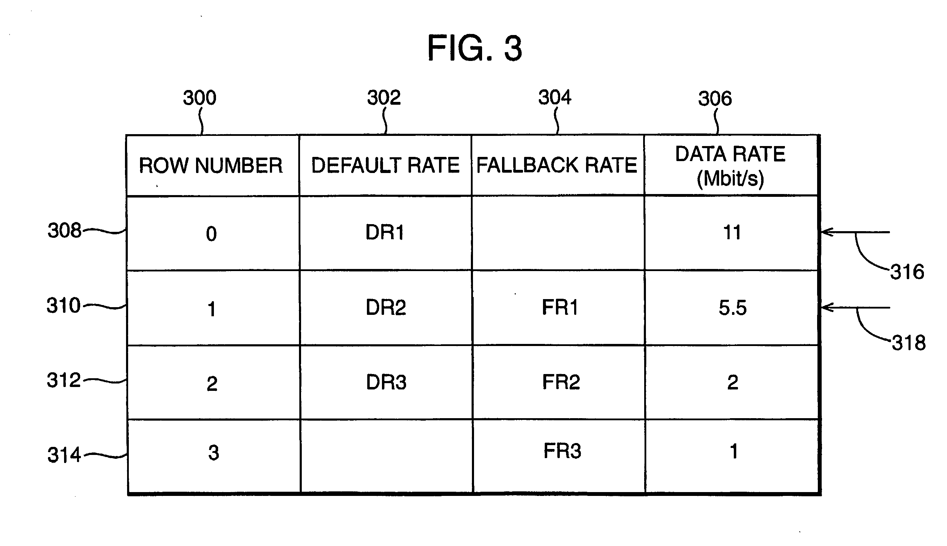

The data rates common to both the terminals are stored in the data rate stores as the common data rate table, which is shown in Figure 3. The common data rate table has a first column 300 identifying a row number associated with a particular common date rate, a second column identifying a set of default rates for the terminal, a third column identifying a set of fallback rates for the terminal, and a fourth column indicating the actual common data rates. In an embodiment of the present invention, as will be described further hereinbelow, the current fallback rate will always be the next slowest data rate from the current default rate. In the present example there are four common data rates. Therefore there are three possible default rates DR1 to DR3, and three possible fallback rates FR1 to FR3. The default rate DR1 corresponds to the highest possible common data rate (11Mbit/s), and there is no fallback rate associated with this common data rate. The fallback rate FR3 corresponds to the lowest possible common data rate (1Mbit/s), and there is no default rate associated with this data rate.

The four common data rates are thus presented in the four rows 308 to 314 of the common data rate table. A default pointer 316 points to the currently selected default rate, and a fallback pointer 318 points to the currently selected fallback rate.

In a step 204, the initial parameters for the enhanced rate fallback operation mode of operation are set. The current default rate CDEFR is set at the highest possible common data rate (DR1), and the current fallback rate CFALLR is set at the second highest possible common data rate (FR1). The current data rate CDR for operation is then selected to be the current default rate CDEFR. The highest possible common data rate is defined as HCDR, HCDR corresponding to the row number of the common data rate table associated with the highest common data rate. On the assumption that, in general, there are a set of N possible common data rates (in the present example N=4), then the lowest common data rate is in row HCDR+N of the table.

Thus the pointer 316 points to row 0 of the common data rate table, and the pointer 318 points to row 1 of the common data rate table.

It is initially assumed that good channel conditions exist, and therefore the first and second terminals proceed to communicate with the current data rate set to the default rate of the highest common data rate. Thus initially the current default rate is DR1 for both the first and second terminals and the fallback rate is FR1 for both the first and second terminals. The current data rate for both terminals corresponds to the current default rate.

In a step 206, the number of successive acknowledgements received by both the first and second terminals is counted. In general, if Y successive acknowledgements are not received then it is assumed that the quality of the channel is insufficient to support the current data rate, and therefore the technique of the present invention is utilised to reduce the current data rate. If X successive acknowledgements are received, then it is assumed that the channel is sufficiently good to increase the current data rate.

In a step 208, the counter the Y counter 108 of the first terminal counts receipt of acknowledgements. The counter is controlled by the input/output control circuit 100 to look for an acknowledgement within a fixed time period from a signal being transmitted. If Y successive acknowledgements are received, then the Y counter reverts to step 206 and continues counting.

If Y successive acknowledgements are not received, then in a step 210 it is determined whether the current data rate CDR is equal to the lowest available common data rate (HCDR+N). If it is, then it is not possible to lower the data rate further, and the operation returns to step 206. In addition, a warning signal may be sent to the input/output control circuit, and acted on by higher level control circuitry.

If the current data rate is not equal to the lowest possible common data rate, then in a step 212 it is determined whether the current data rate CDR is equal to the current default data rate CDEFR. If it is, then the current data rate can be reduced to the next lowest data rate by simply switching the current data rate to the current fallback rate CFALLR. Thus in a step 216 the input/output control circuit sets the current data rate CDR to the current fallback rate CFALLR. Thus if the first terminal is operating at the default rate DR3, for example, then the current fallback rate would be FR3. Thus the simple switch from the current default rate to the current fallback rate ensures a one step decrease in the data rate of the first terminal.

If the current data rate is set to the current default data rate CDEFR, then in a step 214 the current fallback rate CFALLR is increased by one and the current default rate is increased by one, then in step 216 the current data rate CDR of the first terminal is set to the new current fallback rate.

Thus if the first terminal had been operating at fallback rate FR1, then the current fallback rate CFALLR would have been FR1 and the current default rate CDEFR would have been DR1. After step 214, the current fallback rate becomes FR2 and the current default rate becomes DR2. The current data rate remains at the current default rate after step 216, but the current default rate has changed.

Operation then returns to the counting step 206, if N successive acknowledgements are again not received the steps 208 to 216 are repeated.

In a step 218, the X counter 106 of the first terminal counts receipt of acknowledgements. The counter is controlled by the input/output control circuits 100 to look for an acknowledgement within a fixed time period from a signal being transmitted. If X successive acknowledgements are not received, then the X counter reverts to step 206 and continue counting.

If X successive acknowledgements are received then the input/output control circuit, in a step 220, determines whether the current data rate is equal to the highest common data rate. If it is, then the input/output control circuit reverts to step 206 and continues counting, since the data rate cannot be increased further. In one implementation of the invention, the step 218 and the successive steps thereafter may be disabled whenever the current data rate corresponds to the highest possible data rate.

In a step 222 it is determined whether the current data rate is equal to the current fallback rate CFALLR. If this is the case, then the current data rate can be increased to the next highest data rate by simply switching the current data rate to the current default rate CDEFR. Thus if the first terminal is operating at the fallback rate FR1, then the current default rate would be DR1. Thus the simple switch from the current fallback rate to the current default rate ensures a one step increase in the data rate of the first terminal. In step 226 the current data rate CDR is set to the current default rate CDEFR.

If the current data rate is not set to the current feedback rate, then in a step 224 the current default rate is decreased by one and the current fallback rate is decreased by one.

In step 226 the current data rate CDR is set to the current default rate CDEFR and the input/output control circuit then proceeds at the current default rate CDEFR.

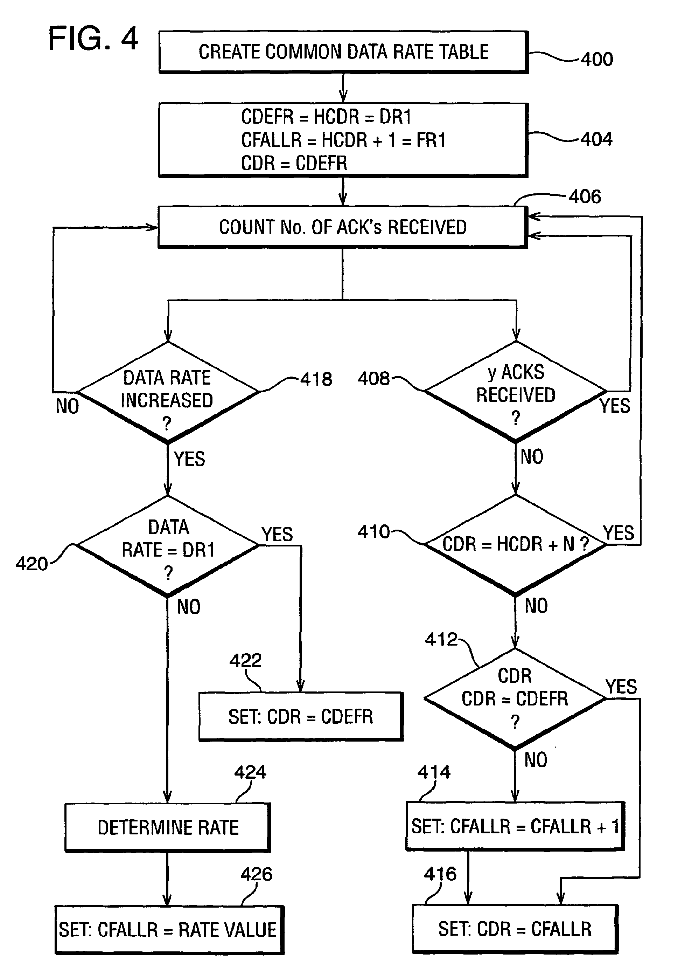

The operation for the second terminal will now be described with reference to the flow diagram of Figure 4. The steps 400 to 406 of Figure 3 are identical to the steps 200 to 206 of Figure 2, and the operation of these steps is not repeated here.

In this preferred embodiment, the operation of the second terminal differs from that of the first in that the current default rate always remains as the highest possible common data rate HCDR, and never changes regardless of the current data rate. Thus the common default rate CDEFR is initially set to the value DR1 and remains there

The steps for reducing the current data rate for the second terminal based upon a failure to receive acknowledgements is almost identical to the steps 208 to 216 of Figure 2, except, as discussed above, the default rate never changes.

Thus, in a step 408, the Y counter 158 of the second terminal counts receipt of acknowledgements. The counter 158 is controlled by the input/output control circuit 150 to look for an acknowledgement within a fixed time period from a signal being transmitted. If Y successive acknowledgements are received, then the Y counter 158 reverts to step 406 and continues counting.

If Y successive acknowledgements are not received, then in a step 410 it is determined whether the current data rate CDR is equal to the lowest available common data rate (HCDR+N). If it is, then it is not possible to lower the data rate further, and the operation returns to step 406. In addition, a warning signal may again be sent to the input/output control circuit, and acted on by higher level control circuitry.

If the current data rate is not equal to the lowest possible common data rate, then in a step 412 it is determined whether the current data rate CDR is equal to the current default data rate CDEFR. If it is, then the current data rate can be reduced to the next lowest data rate by simply switching the current data rate to the current fallback rate CFALLR. Thus in a step 416 the input/output control circuit sets the current data rate CDR to the current fallback rate CFALLR.

If the current data rate is not set to the current default rate, then in a step 414 the current fallback rate is increased by one, and then in step 416 the current data rate CDR of the second terminal is set to the current fallback rate. As noted above, the current default rate does not change. Obviously, in step 412 the detection of whether the current data rate corresponds to the current default rate may be replaced by a comparison to the maximum data rate, which the current default rate is fixed to.

Operation then returns to the counting step 406, and if N successive acknowledgements are again not received the steps 408 to 416 are repeated.

In this embodiment, the second terminal continues to transmit at the fall back rate after fall back even if the channel conditions improve. The second terminal does not count for successive numbers of received acknowledgements which would indicate improved channel conditions, as the first terminal does.

In a step 418 the second terminal determines whether the data rate of transmission from the first terminal has increased. This may be a continuous operation. If it is determined that the data rate of transmission has increased, then the second terminal determines the data rate of the first terminal.

In a step 420, the second terminal determines whether the data rate of the first terminal equals the value DR1. If it does, then in a step 422 the second terminal sets the current data rate CDR to the current default rate CDEFR (i.e. DR1).

If the data rate of the first terminal is not DR1, in a step 424 the second terminal determines the value of the received data rate, i.e. the data rate of the first terminal. In a step 426 the second terminal sets the current fallback rate to the value. If the second terminal is running at less than the value DR1, then it will always be running at the current fallback rate, as the current default rate value never changes.

Considering now the example shown in Figure 3 specifically, the length of the table is 4, i.e. communication can take place at any of the 4 data rates. It is also assumed, for the purposes of the following simple example, that X=4 and Y=2.

The first communication between the second terminal (access point) and the first terminal (station) will take place at a current data rate of DR1 with FR1 as the current fallback rate. If 2 acknowledgments are missed then the system starts transmitting at the current fallback rate FR1. If 2 acknowledgments are missed again then communication will take place at a revised current fallback rate of FR2, and the new current default rate is DR2. As per the preferred embodiment, the default rate is changed only for the station. In the access point the current default rate will always be DR1. This process of rate fallback continues until FR3 is the current fallback rate and DR3 is the current default rate. The system keeps on transmitting at FR3 even if an acknowledgment is missed again, and DR3 remains the current default rate.

In the station the upgrade to a higher data rate is controlled by attempts triggered by a timer or a number of successful transmissions (i.e. a number of acknowledgments received). For example if the current data rate is the current fallback rate FR3 and 4 acknowledgments are received, the transmission data rate becomes DR3. If successful transmission continues then the station will keep on increasing its data rate until it reaches the rate DR1.

In the access point the transmission continues at FR3, if the Station transmits at FR2 then the new fallback rate of the access point is set as FR2 and the transmission from the access point takes place at FR2. If due to some reason, the next data received from the station is at DR1 then the access point starts transmitting at DR1.

Thus an enhanced data rate control mechanism has been described. If the handshake between communicating systems is successful then the common data rates that can be used for communication is decided. The common data rates are then put in a common data rate table for future reference. In the case of the IEEE 802.11 (WaveLAN) guideline, the handshake procedure is taken care of during Association/Re-Association. The system then takes a Default Rate, DR, and Fallback Rate, FR, based on the enhanced data rate control technique described herein. This technique gives the possibility for the system to work at different available data rates depending on the channel situation and the communicating systems.

In a WaveLAN application, the rates that can be supported by a station or an access point are given in the 'supported rates' field of management frames. Once the link is made the system will work at the highest common data rate given in 'supported rates' field or, at fixed data rate if requested by the user.

Although the invention has been described in relation to the specific example where the first and second terminals each utilise differing mechanisms for dynamically adapting the data rate, it will be appreciated that in other applications the first and second terminals may both use the same technique. It is also envisaged that in certain applications only one of the terminals may utilise the technique of the present invention, and the data rate dynamically determined by the one terminal communicated to the other.

## Claims

1. A method for selecting a data rate for a communication channel between first and second devices (116, 166) having a set of common data rates (102, 152), comprising: selecting an initial data rate from the set (102, 152); adjusting the data rate responsive to a change in channel conditions; and
**characterised by**:
determining the set of common data rates (102, 152) during the establishment of the communication channel (114, 164) between the first and second devices (116, 166), wherein the step of determining comprises transmitting from the first device (116) a first data rate set (104) and receiving from the second device (166) a second data rate set (154);
increasing or decreasing the data rate responsive to counting the number of successive acknowledgements received by said first device (116) giving an indication of the success of a transmission wherein if the transmission is unsuccessful the data rate is decreased to the next successive lower value in the set of common data rates (102, 152).

2. The method of claim 1, wherein said step of determining comprises storing the set of data rates common to both the first and second data rate sets (104, 154).

3. The method of claim 1 in which if the transmission is successful the data rate is increased.

4. The method of claim 3 wherein the data rate is increased to the next successive higher value in the set (102, 152).

5. The method of any one of claims 1 to 4 wherein the set of common data rates (102, 152) comprises n data rates, and further comprising the steps of defining a set of n-1 default data rates (302) comprising the first to (n-1)th data rates (306); and defining a set of n-1 fallback rates (304) comprising the second to nth data rates (306), the (n-1)th default rate corresponding thereby corresponding the (n-2)th fallback rate.

6. The method of any one of claims 1 to 4 wherein the set of common data rates (102, 152) comprises n data rates, and further comprising the steps of defining a default rate corresponding to the highest data rate (DR1) of the set, and defining a set of n-1 fallback rates (304) comprising the second to nth data rates.

7. The method of claim 5 wherein the data rate is increased by switching from a fallback rate (304) to a corresponding default rate (302).

8. The method of claim 7 wherein the data rate is further increased by switching to the next successive higher value in the default rate set (302).

9. The method of claim 5 or claim 6 wherein the data rate is decreased by switching from a default rate (302) to a fallback rate (304).

10. The method of claim 9 wherein the data rate is further decreased by switching to the next successive lower value in the fallback rate set (304).

11. The method of claim 6 further comprising the step of detecting the data rate of a received signal, and increasing the data rate responsive to the received data rate being greater than the current data rate.

12. The method of claim 11 wherein the data rate is increased to the received data rate.

13. The method of any preceding claim wherein the initial data rate is the highest common data rate (DR1).

## Patentansprüche

1. Verfahren zum Auswählen einer Datenrate für einen Kommunikationskanal zwischen einer ersten und einer zweiten Vorrichtung (116, 166) mit einem Satz von gemeinsamen Datenraten (102, 152), mit: Auswählen einer Anfangsdatenrate aus dem Satz (102, 152); Anpassen der Datenrate in Antwort auf eine Veränderung in den Kanalbedingungen; und
**gekennzeichnet durch**:
Bestimmen des Satzes von gemeinsamen Datenraten (102, 152) während des Aufbaus des Kommunikationskanals (114, 164) zwischen der ersten und der zweiten Vorrichtung (116, 166), wobei der Schritt des Bestimmens das Übertragen eines ersten Datenratensatzes (104) von der ersten Vorrichtung (116) und das Empfangen eines zweiten Datenratensatzes (154) von der zweiten Vorrichtung (166) umfasst;
Erhöhen oder Vermindern der Datenrate in Antwort auf die gezählte Anzahl von erfolgreichen Rückmeldungen, welche von der ersten Vorrichtung (116) empfangen werden, die einen Hinweis auf den Erfolg der Übertragung geben, wobei, wenn die Übertragung nicht erfolgreich ist, die Datenrate auf den nächsten erfolgreichen niedrigeren Wert in dem Satz von gemeinsamen Datenraten (102, 152) vermindert wird.

2. Verfahren nach Anspruch 1, wobei der Schritt des Bestimmens das Speichern des Satzes von Datenraten umfasst, der sowohl dem ersten als auch dem zweiten Datenratensatz (104, 154) gemeinsam ist.

3. Verfahren nach Anspruch 1, wobei, wenn die Übertragung erfolgreich ist, die Datenrate erhöht wird.

4. Verfahren nach Anspruch 3, wobei die Datenrate auf den nächsten erfolgreichen höheren Wert in dem Satz (102, 152) erhöht wird.

5. Verfahren nach einem der Ansprüche 1 bis 4, wobei der Satz von gemeinsamen Datenraten (102, 152) n Datenraten umfasst, und ferner mit den Schritten des Festlegens eines Satzes von n-1 Standarddatenraten (302) mit den ersten bis (n-1)ten Datenraten (306); und des Festlegens eines Satzes von n-1 Rückzugsraten (304) mit den zweiten bis n-ten Datenraten (306), wobei die (n-1)te Standardrate dabei der entsprechenden (n-2)ten Rückzugsrate entspricht.

6. Verfahren nach einem der Ansprüche 1 bis 4, wobei der Satz von gemeinsamen Datenraten (102, 152) n Datenraten umfasst, und ferner mit den Schritten des Festlegens einer Standardrate entsprechend der höchsten Datenrate (DR1) des Satzes, und des Festlegens eines Satzes von n-1 Rückzugsraten (304) mit der zweiten bis n-ten Datenrate.

7. Verfahren nach Anspruch 5, wobei die Datenrate durch das Schalten von einer Rückzugsrate (304) zu einer entsprechenden Standardrate (302) erhöht wird.

8. Verfahren nach Anspruch 7, wobei die Datenrate weiter durch Schalten zu dem nächsten erfolgreichen höheren Wert in dem Standardratensatz (302) erhöht wird.

9. Verfahren nach Anspruch 5 oder 6, wobei die Datenrate durch Schalten von einer Strandardrate von (302) zu einer Rückzugsrate (304) vermindert wird.

10. Verfahren nach Anspruch 9, wobei die Datenrate weiter durch Schalten zu dem nächsten erfolgreichen niedrigeren Wert in dem Rückzugsratensatz (304) vermindert wird.

11. Verfahren nach Anspruch 6, ferner mit dem Schritt des Feststellens der Datenrate eines empfangenen Signals, und des Erhöhens der Datenrate in Antwort auf die empfangene Datenrate, die größer als die aktuelle Datenrate ist.

12. Verfahren nach Anspruch 11, wobei die Datenrate auf die empfangene Datenrate erhöht wird.

13. Verfahren nach einem der vorstehenden Ansprüche, wobei die Anfangsdatenrate die höchste gemeinsame Datenrate (DR1) ist.

## Revendications

1. Procédé destiné à sélectionner un débit de données pour un canal de communication entre des premier et deuxième dispositifs (116, 166) ayant un ensemble de débits de données communs (102, 152), comprenant : la sélection d'un débit de données initial dans l'ensemble (102, 152) ; l'ajustement du débit de données en réponse à un changement de conditions du canal ; et
**caractérisé par** :
la détermination de l'ensemble de débits de données communs (102, 152) pendant l'établissement du canal de communication (114, 164) entre les premier et deuxième dispositifs (116, 166), dans lequel l'étape de détermination comprend la transmission depuis le premier dispositif (116) d'un premier ensemble de débits de données (104) et la réception depuis le deuxième dispositif (166) d'un deuxième ensemble de débits de données (154) ;
l'augmentation ou la réduction du débit de données en réponse au comptage du nombre d'accusés de réception successifs reçus par ledit premier dispositif (116) donnant une indication de la réussite d'une transmission, dans lequel, si la transmission échoue, le débit de données est réduit à la valeur immédiatement inférieure de l'ensemble de débits de données communs (102, 152).

2. Procédé selon la revendication 1, dans lequel ladite étape de détermination comprend le stockage de l'ensemble de débits de données communs aux premier et deuxième ensembles de débits de données (104, 154).

3. Procédé selon la revendication 1, dans lequel si la transmission réussit, le débit de données est augmenté.

4. Procédé selon la revendication 3, dans lequel le débit de données est augmenté à la valeur immédiatement supérieure de l'ensemble (102, 152).

5. Procédé selon l'une quelconque des revendications 1 à 4, dans lequel l'ensemble de débits de données communs (102, 152) comprend n débits de données, et comprenant en outre les étapes de définition d'un ensemble de n-1 débits de données par défaut (302) comprenant les premier à (n-1)-ième débits de données (306) ; et la définition d'un ensemble de n-1 débits de repli (304) comprenant les deuxième à n-ième débits de données (306), le (n-1)-ième débit par défaut correspondant ainsi au (n-2)-ième débit de repli.

6. Procédé selon l'une quelconque des revendications 1 à 4, dans lequel l'ensemble de débits de données communs (102, 152) comprend n débits de données, et comprenant en outre les étapes de définition d'un débit par défaut correspondant au débit de données le plus élevé (DR1) de l'ensemble, et définissant un ensemble de n-1 débits de repli (304) comprenant les deuxième à n-ième débits de données.

7. Procédé selon la revendication 5, dans lequel le débit de données est augmenté en basculant d'un débit de repli (304) à un débit par défaut correspondant (302).

8. Procédé selon la revendication 7, dans lequel le débit de données est en outre augmenté par basculement à la valeur immédiatement supérieure de l'ensemble de débits par défaut (302).

9. Procédé selon la revendication 5 ou 6, dans lequel le débit de données est réduit par basculement d'un débit par défaut (302) à un débit de repli (304).

10. Procédé selon la revendication 9, dans lequel le débit de données est en outre augmenté par basculement à la valeur immédiatement inférieure de l'ensemble de débits de repli (304).

11. Procédé selon la revendication 6, comprenant en outre l'étape de détection du débit de données d'un signal reçu, et d'augmentation du débit de données en réponse au fait que le débit de données reçu est supérieur au débit de données courant.

12. Procédé selon la revendication 11, dans lequel le débit de données est augmenté au débit de données reçu.

13. Procédé selon l'une quelconque des revendications précédentes, dans lequel le débit de données initial est le débit de données commun le plus élevé (DR1).
